# EUROPÄISCHE PATENTSCHRIFT

(11) **EP 2 755 876 B1**
(45) Veröffentlichungstag und Bekanntmachung des Hinweises auf die Patenterteilung: **08.05.2019**
(21) Anmeldenummer: 12756753.5
(22) Anmeldetag: 12.09.2012
(51) Int. Cl.: B60T 8/172

(54) **VERFAHREN ZUM SCHÄTZEN VON REIFENPARAMETERN FÜR EIN FAHRZEUG**
METHOD FOR ESTIMATING TIRE PARAMETERS FOR A VEHICLE
PROCÉDÉ D'ESTIMATION DE PARAMÈTRES DE PNEUMATIQUES POUR UN VÉHICULE

(30) Priorität: 12.09.2011 DE 102011082534; 12.09.2011 DE 102011082549; 21.11.2011 DE 102011086710; 02.05.2012 DE 102012207297
(43) Veröffentlichungstag der Anmeldung: 23.07.2014
(73) Patentinhaber: Continental Teves AG & Co. OHG, 60488 Frankfurt am Main (DE)
(72) Erfinder: STEINHARDT, Nico, 60327 Frankfurt (DE)
(86) Internationale Anmeldenummer: PCT/EP2012/067869
(87) Internationale Veröffentlichungsnummer: WO 2013/037847

(56) Entgegenhaltungen:
- EP-A1- 1 336 513
- WO-A1-01/87647
- DE-A1-102006 009 682
- US-B1- 6 313 742
- US-B1- 6 508 102

## Beschreibung

Die Erfindung betrifft ein Verfahren zum Schätzen von Reifenparametern für ein Fahrzeug, eine Steuervorrichtung zur Durchführung des Verfahrens und ein Fahrzeug mit der Steuervorrichtung.

Aus der WO 2011 / 098 333 A1 ist bekannt, in einem Fahrzeug verschiedene Sensorgrößen heranzuziehen, um bereits vorhandene Sensorgrößen zu verbessern oder neue Sensorgrößen zu generieren und somit die erfassbare Information zu steigern.

Aus der WO 01 / 87 647 A1 ist ein auf Radgeschwindigkeit basiertes Verfahren zum Schätzen von Reifendruckparametern offenbart.

Aus der EP 1 336 513 A1 ist ein Verfahren zur Reifendrucküberwachung offenbart, womit die Raddrehzahlen mit der zurückgelegten Wegstrecke, bzw. die Kraftfahrzeuggeschwindigkeit mit der durch das GPS-System gemessenen Geschwindigkeit in Verbindung gebracht werden, um auf den dynamischen Radradius und damit auf den Reifendruck zu schließen.

Es ist Aufgabe der vorliegenden Erfindung, die tatsächlichen Reifenparameter möglichst genau zu bestimmen.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst ein Verfahren zum Schätzen von Reifenparametern für ein Fahrzeug die Schritte:
- Messen einer Referenzbewegung des Fahrzeuges;
- Modellieren einer Modellbewegung des Fahrzeuges basierend auf einem von den zu schätzenden Reifenparametern befreiten Modell; und
- Schätzen der Reifenparameter des Fahrzeuges basierend auf einer Gegenüberstellung der Referenzbewegung und der Modellbewegung.

Unter einer Referenzbewegung soll eine Bewegung des Fahrzeuges verstanden werden, die messtechnisch mit einer Genauigkeit erfasst wird, die zur weiteren Informationsverarbeitung im Fahrzeug als ausreichend angesehen wird. Hingegen soll die Modellbewegung eine Bewegung des Fahrzeuges sein, die mit einem Fehler von der Referenzbewegung abweichen kann. Unter der Bewegung sollen nachstehend wenigstens der Größen verstanden werden, die eine Position des Fahrzeuges zeitlich im Raum beeinflussen können. Diese Größen sind insbesondere die Beschleunigung, die Geschwindigkeit und die Rollraten des Fahrzeuges, die eine Gierrate, eine Wankrate und eine Nickrate umfassen können.

Dem angegebenen Verfahren liegt die Überlegung zugrunde, dass die Generierung neuer Sensordaten oder die Erhöhung der Qualität bereits vorhandener Sensordaten basierend auf redundant erfasster Informationen im Fahrzeug ein exaktes Modell des Fahrzeuges voraussetzt. Dieses exakte Modell benötigt jedoch Informationen über den Kontakt der Räder des Fahrzeuges mit der Straße auf dem die Räder rollen. Diese Informationen werden nachstehend Reifenparameter genannt und umfassen die Schräglaufsteifigkeit, die Schlupfsteifigkeit und die Reifenhalbemesser der Räder. Die Reifenparameter sind keine festen Größen, sondern sind abhängig von vielen Faktoren, wie Temperatur, Feuchtigkeit, Fahrbahnbeschaffenheit, und so weiter.

Die Idee hinter dem angegebenen Verfahren ist nun, dass wenn die Bewegung für bekannte Reifenparameter die Wirklichkeit ausreichend gut widerspiegelt, ein Fehler zwischen der Modellbewegung des Fahrzeuges und einer Referenzbewegung des Fahrzeuges aus einem Fehler der Reifenparameter her rühren muss. Mit anderen Worten kann der tatsächliche Reifenparameter aus dem im Modell verwendeten Reifenparameter und einem Fehler zwischen der modellierten Bewegung und der tatsächlichen Bewegung zusammengesetzt werden.

Im Sinne des angegebenen Verfahrens soll es sich bei dem von den zu schätzenden Reifenparametern befreiten Modell nicht um ein völlig reifenparameterfreies Modell handeln, sondern um ein Modell, in dem unbekannt ist, ob die verwendeten Reifenparameter stimmen, oder nicht. Daher sind die verwendeten Reifenparametern von den zu schätzenden Reifenparametern zu unterscheiden. Die Durchführung der Schätzung ist zudem nicht auf die Gegenüberstellung beschränkt. Die Schätzung kann beispielsweise die Gegenüberstellung der Referenzbewegung und der Modellbewegung und eine anschließende Aktualisierung der verwendeten Reifenparameter umfassen, die mit einem aus der Gegenüberstellung resultierenden Korrekturwert beaufschlagt werden. Alternativ kann die Schätzung selbst zu den gesuchten zu schätzenden Reifenparametern führen.

In einer Weiterbildung umfasst das angegebene Verfahren den Schritt Erfassen der Referenzgeschwindigkeit des Fahrzeuges an Radaufstandspunkten des Fahrzeuges. Dieser Weiterbildung liegt die Überlegung zugrunde, dass die Modellierung der Modellgeschwindigkeit des Fahrzeuges basierend auf einem Odometriemodell erfolgen könnte, das die Raddrehzahlen der einzelnen Räder mit den zu schätzenden Reifenparametern als Eingangsgrößen empfängt. Für eine größtmögliche Genauigkeit der Schätzergebnisse sollte daher die Geschwindigkeit des Fahrzeugs auch an den Stellen der erfassten Raddrehzahlen und damit an den Radaufstandspunkten erfasst werden. Die Erfassung der Geschwindigkeit an den Radaufstandspunkten kann dadurch erfolgen, dass eine Fahrzeuggeschwindigkeit an einem beliebigen Punkt des Fahrzeuges erfasst wird, die dann über bekannte Fahrzeugparameter, wie Spurweiter, Radstand und Abstände zum Koordinatenursprung in die entsprechenden Geschwindigkeiten an den Radaufstandspunkten umgerechnet wird.

Erfindungsgemäß umfasst das angegebene Verfahren den Schritt Aufstellen des von den zu schätzenden Reifenparametern befreiten Modells basierend auf angenäherten Reifenparametern.

Erfindungsgemäß umfasst das angegeben Verfahren den Schritt, Verwenden der geschätzten Reifenparameter als angenäherte Reifenparameter in dem Modell, zum Schätzen neuer Reifenparameter. Das heißt, dass das angegebene Verfahren iterativ durchgeführt wird, wobei für die zu schätzenden Reifenparameter zunächst ein Startwert vorgegeben wird. Immer wenn die Reifenparameter neu geschätzt wurden, werden diese dann als Startwert für eine neue Schätzung herangezogen, so dass die geschätzten Reifenparameter letztendlich gegen die tatsächlichen Reifenparameter des Fahrzeuges konvergieren.

In einer Weiterbildung umfasst das angegebene Verfahren die Schritte:
- Erfassen einer Varianz der Referenzbewegung, und
- Modellieren der Bewegung des Fahrzeuges basierend auf der erfassten Varianz.

Die Varianz eines Signals gibt bekanntermaßen die informationstragende Leistung des Signals an. Da sich die Bewegung des Fahrzeuges nicht schlagartig ändern kann, heißt das, dass die Varianz der gemessenen Bewegung klein sein sollte. Daher kann die Varianz selbst als ein Maß für das Rauschen der gemessenen Bewegung herangezogen werden, um dies beispielsweise bei der Modellierung der Bewegung zu berücksichtigen.

In einer zusätzlichen Weiterbildung des angegebenen Verfahrens werden die geschätzten Reifenparameter des Fahrzeuges nur dann als gültig betrachtet werden, wenn die Referenzbewegung und/oder die Modellbewegung einen bestimmten Wert überschreiten. Dieser Weiterbildung liegt die Überlegung zugrunde, dass insbesondere eine messtechnische Erfassung der Referenzbewegung Toleranzen und Fehlern unterworfen ist, die insbesondere in kleinen Messbereichen des Sensors durch Rauschen sehr groß werden können. Daher ist für einen unteren Messbereich eines Sensors, der an der Erfassung der Referenzbewegung und/oder möglichweise an der Modellierung der Modellbewegung beteiligt ist, sein Sensorsignal sehr ungenau, weshalb auch die geschätzten Reifenparameter sehr ungenau sein müssen. Unter dieser Voraussetzung ist es Idee der Weiterbildung die Schätzergebnisse der Reifenparameter nur dann heranzuziehen, wenn als Randbedingung die Bewegung des Fahrzeuges einen bestimmten Schwellwert überschreitet. Besonders bevorzugt sollte dabei eine Gesamtbeschleunigung des Fahrzeuges größer als 5m/s² sein. Bewegt sich das Fahrzeug überhaupt nicht, so können zudem auch keine Aussagen über die Reifenparameter getroffen werden.

In einer noch anderen Weiterbildung umfasst das angegebene Verfahren den Schritt Gegenüberstellen der realen Bewegung und der modellierten Bewegung basierend auf einem Beobachter. Unter einen solchen Beobachter kann jedes Filter fallen, das eine analoge oder digitale Zustandsbeobachtung des Fahrzeuges zulässt. So kann beispielsweise ein Luenberger Beobachter herangezogen werden. Soll das Rauschen mit berücksichtigt werden, käme ein Kalman-Filter in Betracht. Soll auch noch die Form des Rauschens berücksichtigt werden, so könnte ggf. ein Partikelfilter herangezogen werden, der eine Grundmenge an verfügbaren Rauschszenarien besitzt und das bei der Elimination zu berücksichtigende Rauschszenario beispielsweise durch eine Monte-Carlo-Simulation auswählt.

In einer besonderen Weiterbildung ist der Beobachter ein Kalman-Filter, der hinsichtlich seiner notwendigen Rechenressourcen ein optimales Ergebnis liefert.

Gemäß einem weiteren Aspekt der Erfindung ist eine Steuervorrichtung eingerichtet, ein angegebenes Verfahren durchzuführen.

In einer Weiterbildung der angegebenen Steuervorrichtung weist die angegebene Vorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte eines der angegebenen Verfahren durchzuführen, wenn das Computerprogramm auf einem Computer oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Gemäß einem weiteren Aspekt der Erfindung umfasst ein Fahrzeug eine angegebene Steuervorrichtung.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine Prinzipdarstellung eines Fahrzeuges mit einem Fusionssensor,
Fig. 2 eine Prinzipdarstellung den Fusionssensor aus Fig. 1, und
Fig. 3 eine Reifenparameterkennlinie zeigen.

In den Figuren werden gleiche technische Elemente mit gleichen Bezugszeichen versehen und nur einmal beschrieben.

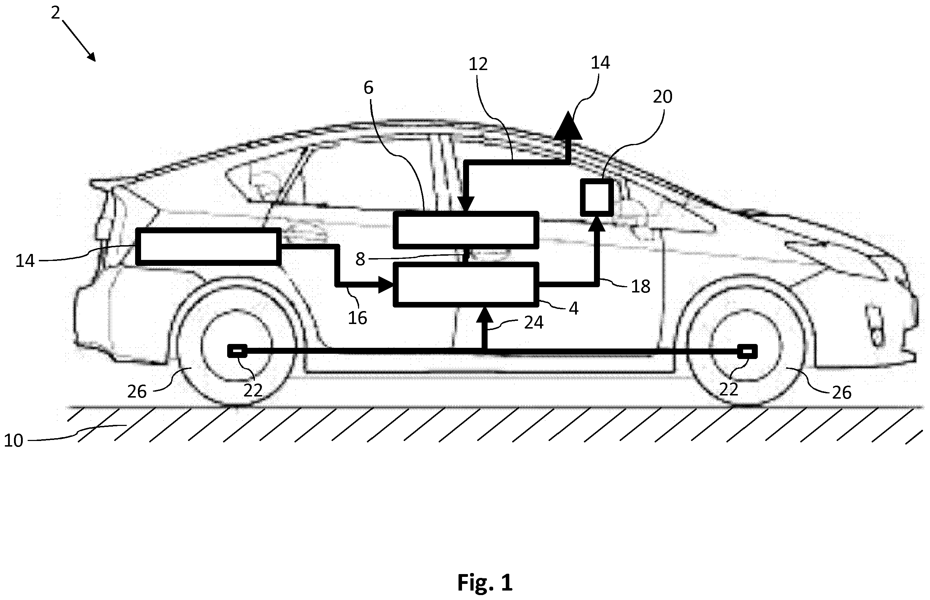

Es wird auf Fig. 1 Bezug genommen, die eine Prinzipdarstellung eines Fahrzeuges 2 mit einem Fusionssensor 4 zeigt.

Der Fusionssensor 4 empfängt in der vorliegenden Ausführungsform über einen an sich bekannten GNSS-Empfänger 6 Positionsdaten 8 des Fahrzeuges 2, die eine absolute Position des Fahrzeuges 2 auf einer Fahrbahn 10 angeben. Diese Positionsdaten 8 werden in der vorliegenden Ausführung in einer dem Fachmann bekannten Weise aus einem GNSS-Signal 12 in dem GNSS-Empfänger 6 abgeleitet, das über eine GNSS-Antenne 14 empfangen wird. Für Details dazu wird auf die einschlägige Fachliteratur dazu verwiesen.

Der Fusionssensor 4 ist in einer noch zu beschreibenden Weise dazu ausgebildet, den Informationsgehalt der aus dem GNSS-Signal 12 abgeleiteten Positionsdaten 8 zu steigern. Dies ist einerseits notwendig, da das GNSS-Signal 12 einen sehr hohen Signal/Rauschbandabstand aufweisen und so sehr ungenau sein kann. Andererseits ist das GNSS-Signal 12 nicht ständig verfügbar.

In der vorliegenden Ausführung weist das Fahrzeug 2 dazu einen Inertialsensor 14 auf, der Fahrdynamikdaten 16 des Fahrzeuges 2 erfasst. Darunter fallen bekanntermaßen eine Längsbeschleunigung, eine Querbeschleunigung sowie eine Vertikalbeschleunigung und eine Wankrate, eine Nickrate sowie eine Gierrate des Fahrzeuges 2. Diese Fahrdynamikdaten 16 werden in der vorliegenden Ausführung herangezogen, um den Informationsgehalt der Positionsdaten 8 zu steigern und die Position des Fahrzeuges 2 auf der Fahrbahn 10 zu präzisieren. Die präzisierte Position 18 kann dann von einem Navigationsgerät 20 selbst dann verwendet werden, wenn das GNSS-Signal 12 beispielsweise unter einem Tunnel überhaupt nicht verfügbar ist.

Zur weiteren Steigerung des Informationsgehaltes der Positionsdaten 8 werden in der vorliegenden Ausführung noch Raddrehzahlsensoren 22 verwendet, die die Raddrehzahlen 24 der einzelnen Räder 26 des Fahrzeuges 2 erfassen.

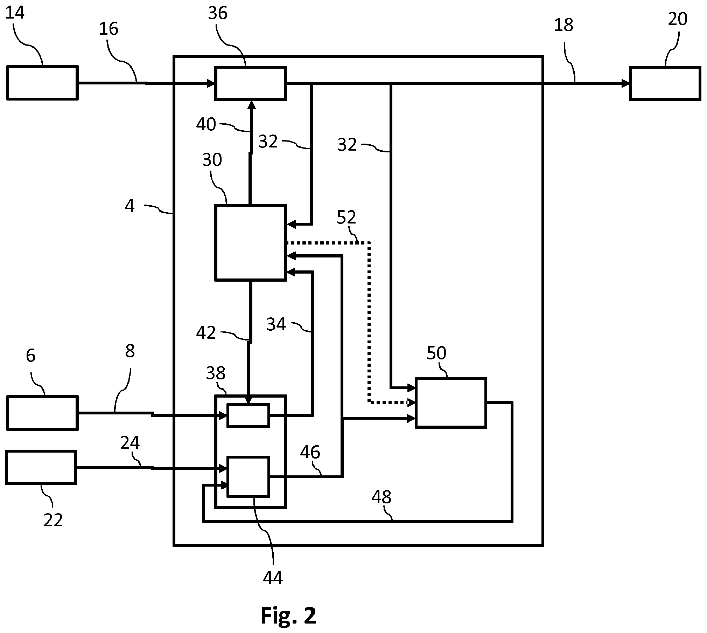

Es wird auf Fig. 2 Bezug genommen, die eine Prinzipdarstellung Fusionssensors 4 aus Fig. 1 zeigt.

In den Fusionssensor 4 gehen die in Fig. 1 bereits erwähnten Messdaten ein. Der Fusionssensor 4 soll die präzisierten Positionsdaten 8 ausgeben. Grundgedanke dazu ist es, die Information aus den Positionsdaten 8 des GNSS-Empfängers 6 den Fahrdynamikdaten 16 aus dem Inertialsensor 14 in ein Filter 30 gegenüberzustellen und so einen Signal/Rauschbandabstand in den Positionsdaten 8 des GNSS-Empfängers 6 oder den Fahrdynamikdaten 16 aus dem Inertialsensor 14 zu erhöhen. Dazu kann das Filter zwar beliebig ausgebildet, ein Kalman-Filter löst diese Aufgabe am wirkungsvollsten mit einem vergleichsweise geringen Rechenressourcenanspruch. Daher soll das Filter 30 nachstehend vorzugsweise ein Kalman-Filter 30 sein.

In das Kalman-Filter 30 gehen Lagedaten 32 des Fahr-zeuges 2 und Vergleichslagedaten 34 des Fahrzeuges 2 ein. Die Lagedaten 32 werden in der vorliegenden Ausführung in einem beispielsweise aus der DE 10 2006 029 148 A1 bekannten Strapdown-Algorithmus 36 aus den Fahrdynamikdaten 16 generiert. Sie enthalten die präzisierten Positionsinformationen 18, aber auch andere Lagedaten über das Fahrzeug 2, wie beispielsweise seine Geschwindigkeit, seine Beschleunigung und sein Heading. Demgegenüber werden die Vergleichslagedaten 34 aus einem Modell 38 des Fahrzeuges 2 gewonnen, das zunächst einmal aus dem GNSS-Empfänger 6 mit den Positionsdaten 8 gespeist wird. Aus diesen Positionsdaten 8 werden dann in dem Modell 38 die Vergleichslagedaten 34 bestimmt, die die gleichen Informationen enthalten, wie die Lagedaten 32. Die Lagedaten 32 und die Vergleichslagedaten 34 un-terscheiden sich lediglich in ihren Werten.

Das Kalman-Filter 30 berechnet basierend auf den Lagedaten 32 und den Vergleichslagedaten 34 einen Fehlerhaushalt 40 für die Lagedaten 32 und einen Fehlerhaushalt 42 für die Vergleichslagedaten. Unter einem Fehlerhaushalt soll nachstehend ein Gesamtfehler in einem Signal verstanden werden, der sich aus verschiedenen Einzelfehlern bei der Erfassung und Übertragung des Signals zusammensetzt. Bei dem GNSS-Signal 12 und damit bei den Positionsdaten 8 kann sich ein entsprechender Fehlerhaushalt aus Fehlern der Satellitenbahn, der Satellitenuhr, der restlichen Refraktionseffekte und aus Fehlern im GNSS-Empfänger 6 zusammensetzen.

Der Fehlerhaushalt 40 der Lagendaten 32 und der Fehlerhaushalt 42 der Vergleichslagedaten 34 werden dann entsprechend dem Strapdown-Algorithmus 36 und dem Modell 38 zur Korrektur der Lagedaten 32 beziehungsweise der Vergleichslagedaten 34 zugeführt. Das heißt, dass die Lagedaten 32 und die Vergleichslagedaten 34 iterativ um ihre Fehler bereinigt werden.

In der vorliegenden Ausführung umfasst das Modell 38 ein dem Fachmann bekanntes Odometriemodell 44, das ausgebildet ist, die zusätzliche Vergleichslagedaten 46 aus den Raddrehzahlen 24 der Raddrehzahlsensoren 22 und einem nicht weiter dargestellten Lenkwinkel des Fahrzeuges 2 zu bestimmen. Die Genauigkeit des Odomoetriemodells 44 in dem Modell 38 hängt davon ab, inwieweit Reifenparameter wie Schräglaufsteifigkeit, Schlupfsteifigkeit und Reifenhalbmesser zu den Rädern 26 des Fahrzeuges bekannt sind. Da diese Reifenparameter von einem Zustand der Räder 26 und der Straße 10 abhängig sind, müssen diese Reifenparameter während der Fahrt angepasst werden, was in der vorliegenden Ausführung in einem Schätzfilter 50 vorgenommen wird.

Das Schätzfilter 50 empfängt in der vorliegenden Ausführung ebenfalls die Lagedaten 32 und die zusätzlichen Vergleichslagedaten 46, verarbeitet jedoch in einer nicht gezeigten Weise ausschließlich die Geschwindigkeiten aus diesen Lagedaten 32, 46. Grundgedanke des Schätzfilters 50 ist, dass in einem Unterschied zwischen den Lagedaten 32 und den zusätzlichen Vergleichslagedaten 46 Korrekturwerte 48 für die Reifenparameter enthalten sind, die das oben genannte Odometriemodell 44 zur Berechnung der zusätzlichen Vergleichsdaten 46 verwendet.

Dazu werden in dem Odometriemodell 44 Annahmen über die Reifenparameter basierend auf einem Startwert getroffen. Die tatsächlichen Reifenparameter sind dafür in den Lagedaten 32 enthalten, da diese messtechnisch basierend auf der tatsächlichen Geschwindigkeit erfasst werden. Daher ist im Modell 38 der vorliegenden Ausführung die Verarbeitung der Positionsdaten 8 aus dem GNSS-Signal 12 vom Odometriemodell 44 getrennt ausgeführt, damit in das Odometriemodell 44 keine tatsächlichen messtechnisch erfassten Lagedaten 32, 34 eingehen, die die Schätzung der Reifenparameter verfälschen könnten. Das Schätzfilter 50 kann die Korrekturwerte 48 zum Anpassen der Reifenparameter basierend auf dem Unterschied zwischen tatsächlicher Lagedaten 32 und der geschätzten zusätzlichen Vergleichslagedaten 46 in jeder beliebigen Weise bestimmen. So kann das Schätzfilter 50 eine einfache Differenz zwischen den Größen bilden, jedoch auch als Kalman-Filter ausgebildet sein, das ebenfalls eine Abweichung zwischen den Lagedaten 32, 46 feststellen kann. Besonders bevorzugt werden bei der Filterung noch die Varianzen der tatsächlichen Lagedaten 32 berücksichtigt, um die Qualität der Reifenparameter zu steigern.

Es sei an dieser Stelle darauf hingewiesen, dass die Reifenparameter prinzipiell auch auf einem Vergleich der aus dem GNSS-Signal 12 abgeleiteten Vergleichslagedaten 34 und den zusätzlichen Vergleichslagedaten 46 aus dem Odometriemodell 44 hergeleitet werden könnten.

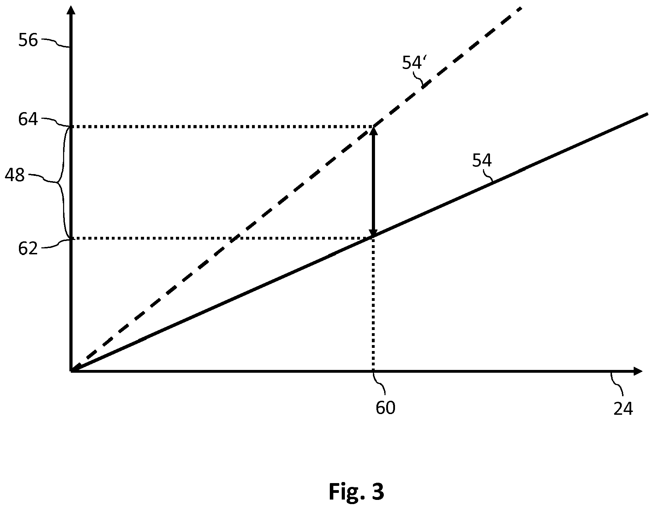

Es wird auf Fig. 3 Bezug genommen, anhand derer eine Korrektur eines Reifenparameters näher erläutert werden soll, der hier als Reifenhalbmesser angenommen ist. In Fig. 3 ist daher eine Reifenhalbmesserkennlinie 54 aufgetragen, die einer Raddrehzahl 24 eines Rades 26 des Fahrzeuges 2 eindeutig eine Längsgeschwindigkeit 56 des Fahrzeuges 2 zuordnet.

Der Reifenhalbmesserkennlinie 54 liegt die Überlegung zugrunde, dass über den Reifenhalbmesser des Rades 26 sein Umfang (U=2rn) berechnet werden kann. Ist bekannt, wie schnell sich das Rad 26 pro Zeiteinheit dreht, also die Raddrehzahl 24, so kann über den bekannten Umfang des Rades 26 seine Längsgeschwindigkeit 56 berechnet werden.

Die Reifenhalbmesserkennlinie 54 ist prinzipbedingt linear steigend, so dass der Reifenhalbmesser die Reifenhalbmesserkennlinie 54 als Steigung beschreibt. Ist der Reifenhalbmesser und damit die Steigung falsch, dann werden den Raddrehzahlen 24 des Fahrzeuges 2 und damit den entsprechenden Rädern 26 falsche Längsgeschwindigkeiten 56 zugeordnet.

Im vorliegenden Ausführungsbeispiel wird daher ein Korrekturwert 48 bei einem bestimmten Raddrehzahlwert 60 bestimmt. Der Korrekturwert 60 bestimmt sich aus der Differenz zwischen einem Modellwert 62 für die Längsgeschwindigkeit 56, der basierend auf der aktuell gültigen Reifenhalbmesserkennlinie 54 bestimmt werden kann und einem Referenzwert 64, durch den die korrigierte Reifenhalbmesserkennlinie, die in Fig. 3 gestrichelt und mit dem Bezugszeichen 54' dargestellt ist, verlaufen sollte.

Die korrigiert Reifenhalbmesserkennlinie 54' kann in einem neuen Schätzschritt dann als aktuell gültige Reifenhalbmesserkennlinie 54 verwendet werden, die dann wiederum basierend auf einem neu erfassten Referenzwert 64 korrigiert wird. Auf diese Weise konvergiert die Reifenhalbmesserkennlinie 54 mit ihrer Steigung gegen den realen Reifenhalbmesser des betreffenden Rades 26.

Der Korrekturwert 48 kann anschließend an das Odometriemodell 44 übertragen werden, das dann intern seine Reifenhalbmesserkennlinie aktualisiert. Alternativ kann auch die Steigung der korrigierten Reifenhalbmesserkennlinie 54' und damit der ermittelte korrigierte Reifenhalbmesser des entsprechenden Rades 26 an das Odometriemodell 44 übertragen werden.

## Patentansprüche

1. Verfahren zum Schätzen von Reifenparametern (48) für ein Fahrzeug (2), umfassend:
- Messen (14) einer Referenzbewegung (32) des Fahrzeuges (2) ;
- Aufstellen eines von den zu schätzenden Reifenparametern (48) befreiten Modells (44) basierend auf angenäherten Reifenparametern (48);
- Modellieren (38) einer Modellbewegung (46) des Fahrzeuges (2) basierend auf dem von den zu schätzenden Reifenparametern (48) befreiten Modell (44); und
- Schätzen (50) der Reifenparameter (48) des Fahrzeuges (2) basierend auf einer Gegenüberstellung der Referenzbewegung (32) und der Modellbewegung (46);
- Verwenden der geschätzten Reifenparameter (48) als angenäherte Reifenparameter (48) in dem Modell (44), zum Schätzen (50) neuer Reifenparameter (48).

2. Verfahren nach Anspruch 1, umfassend:
- Erfassen (14) der realen Geschwindigkeit des Fahrzeuges (2) an Radaufstandspunkten des Fahrzeuges (2).

3. Verfahren nach einem der vorstehenden Ansprüche, umfassend:
- Erfassen einer Varianz (52) der Referenzbewegung (32), und
- Schätzen der Reifenparameter (48) des Fahrzeuges (2) basierend auf der erfassten Varianz (52).

4. Verfahren nach einem der vorstehenden Ansprüche, wobei die geschätzten Reifenparameter (44) des Fahrzeuges (2) als gültig betrachtet werden, wenn die Referenzbewegung (32) und/oder die Modellbewegung (46) einen bestimmten Wert überschreiten.

5. Verfahren nach einem der vorstehenden Ansprüche, umfassend:
- Gegenüberstellen der Referenzbewegung (32) und der Modellbewegung (46) basierend auf einem Beobachter.

6. Verfahren nach Anspruch 5, wobei der Beobachter ein Kalman-Filter ist.

7. Steuervorrichtung (4), die eingerichtet ist, ein Verfahren nach einem der vorstehenden Ansprüche durchzuführen.

8. Fahrzeug (2), umfassend eine Steuervorrichtung (4) nach Anspruch 7.

## Claims

1. Method for estimating tire parameters (48) for a vehicle (2), comprising:
- measurement (14) of a reference movement (32) for the vehicle (2) ;
- setup of a model (44) that is freed of the tire parameters (48) to be estimated on the basis of approximated tire parameters (48) ;
- modeling (38) of a model movement (46) for the vehicle (2) on the basis of the model (44) that is freed of the tire parameters (48) to be estimated; and
- estimation (50) of the tire parameters (48) of the vehicle (2) on the basis of a juxtaposition of the reference movement (32) and the model movement (46);
- use of the estimated tire parameters (48) as approximated tire parameters (48) in the model (44), in order to estimate (50) new tire parameters (48).

2. Method according to Claim 1, comprising:
- detection (14) of the real speed of the vehicle (2) at wheel contact points for the vehicle (2).

3. Method according to either of the preceding claims, comprising:
- detection of a variance (52) in the reference movement (32), and
- estimation of the tire parameters (48) of the vehicle (2) on the basis of the detected variance (52).

4. Method according to one of the preceding claims, wherein the estimated tire parameters (44) of the vehicle (2) are considered to be valid if the reference movement (32) and/or the model movement (46) exceed a particular value.

5. Method according to one of the preceding claims, comprising:
- juxtaposition of the reference movement (32) and the model movement (46) on the basis of an observer.

6. Method according to Claim 5, wherein the observer is a Kalman filter.

7. Control apparatus (4) that is set up to perform a method according to one of the preceding claims.

8. Vehicle (2), comprising a control apparatus (4) according to Claim 7.

## Revendications

1. Procédé d'estimation de paramètres de pneumatique (48) pour un véhicule (2), comprenant les étapes suivantes :
- mesurer (14) un mouvement de référence (32) du véhicule (2) ;
- créer un modèle (44) débarrassé des paramètres de pneumatique (48) à estimer sur la base de paramètres de pneumatique (48) approximatifs ;
- modéliser (38) un mouvement modèle (46) du véhicule (2) sur la base du modèle (44) débarrassé des paramètres de pneumatique (48) à estimer ; et
- estimer (50) les paramètres de pneumatique (48) du véhicule (2) sur la base d'une comparaison du mouvement de référence (32) et du mouvement modèle (46) ;
- utiliser les paramètres de pneumatique (48) estimés comme paramètres de pneumatique (48) approximatifs dans le modèle (44), pour l'estimation (50) de nouveaux paramètres de pneumatique (48).

2. Procédé selon la revendication 1, comprenant l'étape suivante :
- détecter (14) la vitesse réelle du véhicule (2) à des points de contact de roue de véhicule (2).

3. Procédé selon l'une quelconque des revendications précédentes, comprenant les étapes suivantes :
- détecter une variance (52) du mouvement de référence (32), et
- estimer les paramètres de pneumatique (48) du véhicule (2) sur la base de la variance (52) détectée.

4. Procédé selon l'une quelconque des revendications précédentes, dans lequel on considère les paramètres de pneumatique (44) estimés du véhicule (2) comme valables, lorsque le mouvement de référence (32) et/ou le mouvement modèle (46) dépassent une valeur déterminée.

5. Procédé selon l'une quelconque des revendications précédentes, comprenant l'étape suivante :
- comparer le mouvement de référence (32) et le mouvement modèle (46) sur la base d'un observateur.

6. Procédé selon la revendication 5, dans lequel l'observateur est un filtre de Kalman.

7. Dispositif de commande (4), qui est configuré pour exécuter un procédé selon l'une quelconque des revendications précédentes.

8. Véhicule (2), comprenant un dispositif de commande (4) selon la revendication 7.
